Europäisches Patentamt

European Patent Office

Office européen des brevets

(11) Veröffentlichungsnummer : **0 004 632**
**B1**

# EUROPÄISCHE PATENTSCHRIFT

(45) Veröffentlichungstag der Patentschrift :
17.06.81

(51) Int. Cl.³ : **C 05 F 11/00**

(21) Anmeldenummer : **79100923.6**

(22) Anmeldetag : **28.03.79**

---

(54) **Verfahren zur Herstellung eines natürlichen Humusbildners und Düngers auf Rindenbasis.**

---

(30) Priorität : **05.04.78 DE 2814623**
**05.04.78 DE 2814623**

(43) Veröffentlichungstag der Anmeldung :
**17.10.79 (Patentblatt 79/21)**

(45) Bekanntmachung des Hinweises auf die Patenterteilung : **17.06.81 Patentblatt 81/24**

(84) Benannte Vertragsstaaten :
**BE CH FR GB SE**

(56) Entgegenhaltungen :
**CA - A - 901 315**
**DE - C - 393 064**
**DE - C - 675 866**
**DE - C - 747 166**
**FR - A - 668 753**
**FR - A - 2 123 042**
**FR - A - 2 236 814**
**US - A - 3 645 714**
**US - A - 3 953 191**

(73) Patentinhaber : **Ufheil, Egbert**
**Im Sommerhäldele 18**
**D-7601 Ortenberg (DE)**

(72) Erfinder : **Ufheil, Egbert**
**Im Sommerhäldele 18**
**D-7601 Ortenberg (DE)**

(74) Vertreter : **Lichti, Hans, Dr. Ing. et al**
**Durlacher Strasse 31 Postfach 410760**
**D-7500 Karlsruhe 41 (Grötzingen) (DE)**

Imprimerie Jouve, 17, rue du Louvre, 75001 Paris, France

Verfahren zur Herstellung eines natürlichen Humusbildners und Düngers auf Rindenbasis

Die Erfindung betrifft ein Verfahren zur Herstellung eines natürlichen Humusbildners und Düngers auf der Grundlage von bei der Verarbeitung von Stammholz anfallender Baumrinde, die zerkleinert, ggfs. entfeuchtet, und anschließend bedampft wird.

In der modernen Forstwirtschaft wird der gefällte Baum im Wald nur noch entastet, das Stammholz jedoch mit Rinde an den Holzverarbeiter weitergegeben. In dem Holzverarbeitungsbetrieb muß der Stamm dann entrindet werden, so daß in solchen Betrieben große Mengen an Baumrinde anfallen. Damit stellt sich das Problem der Beseitigung bzw. Weiterverwendung der Baumrinde. Sofern sie nicht verbrannt wird, was jedoch in aller Regel teuere Trocknungsprozesse voraussetzt und im übrigen nur eine geringe Wärmegewinnung mit sich bringt, gehen andere Überlegungen dahin, aus Baumrinde Humus zu gewinnen.

Da der natürliche Humifizierungsprozeß von Rinde, aber auch von Holz, mehrere Jahre dauert, muß eine wirtschaftliche Lösung in erster Linie auf eine Verkürzung der Verrottungszeit ausgerichtet sein. Es ist bekannt, Baumrinde zu zerkleinern und das Rindenpulver zusammen mit Erde zu kompostieren. Auch hierbei sind aber noch Verrottungszeiten von mehreren Jahren bei großem Lagerplatzbedarf hinzuzunehmen. Um den Verrottungsprozeß zu verkürzen, können der zerkleinerten Baumrinde biologische Aktivatoren zugesetzt werden, welche die bakterielle und mikrobielle Umsetzung der Kompostmasse beschleunigen. Die Verrottungszeit kann hiermit auf drei bis fünf Monate reduziert werden. Bei diesem Kompostierungsprozeß werden große Lagerflächen benötigt, da die Kompostmasse nur eine relativ geringe Höhe aufweisen darf, um eine einwandfreie Durchlüftung zu erreichen.

Das eingangs angedeutete bekannte Verfahren (DE-A-24 32 432) benötigt demgegenüber wesentlich geringere Behandlungszeiten, indem die Rinde nach dem Trennen vom Stammholz zum Trocknen aufgestapelt, später gereinigt und zerkleinert und schließlich in einer feuchten Dampfatmosphäre bis max. 90 °C einem Quellprozeß überlassen wird. Zur Verbesserung der Eigenschaften sollen mit dem Dampf auch Mineralsalze in das Rindenpulver eingeführt werden. Danach wird das Rindenpulver im Gegenstrom getrocknet und in Kornfraktionen abgesiebt. Durch die kurzfristige Dampfbehandlung bis 90 °C werden die zwischen den Makromolekülen (Kohlenhydrate) vorhandenen Bindungskräfte, die einer Verrottung entgegenwirken, physikalisch angegriffen. Auch die Rindeninhaltsstoffe wie Phenole, Lipide, Mineralien etc., wirken konservierend, werden jedoch gleichfalls durch den Heißdampf angegriffen und geschwächt. Damit wird aber der gesamte Gewebeverband gelockert. Dieses bekannte Verfahren ist im industriellen Maßstab durchführbar und liefert in relativ kurzer Zeit ein verwertbares Produkt, das unmittelbar verwendbar ist.

Das bekannte Verfahren konnte sich dennoch in der Praxis nicht einführen, wofür verschiedene Gründe maßgeblich sind. Zunächst sind die Gestehungskosten für einen solchermaßen hergestellten Humusbildner so hoch, daß das Produkt nicht zu konkurrenzfähigem Preis angeboten werden kann. Die Ursache liegt in erster Linie an dem erforderlichen Investitionsaufwand für die Anlagetechnik und hierbei insbesondere für die Trocknung der Rinde. Dies gilt sowohl für die Vortrocknung, d. h. das Lagern der Rinde auf Stapeln, als auch für das anschließende Bedampfen und das abschließende Trocknen, das mit Warmluft geschieht. Das Bedampfen im Gegenstrom zetzt große Behälter mit Umwälzantrieben und Fördereinrichtungen voraus. Der feuchte Dampf weist die geforderte Temperatur von 90 °C nur auf einem kurzen Abschnitt der Gegenstromstrecke auf, so daß die Bedampfung unzureichend ist. Beim Trocknen mit Warmluft besteht eine hohe Entzündungs- und Explosionsgefahr für das Rindenpulver, so daß nur relativ niedrige Trocknungstemperaturen angewandt werden können. Zudem müssen teuere Sicherheitsvorkehrungen getroffen werden.

Der größte Nachteil dieses Verfahrens besteht darin, daß das Produkt als Humusbildner nur bedingt und als Dünger praktisch gar nicht eingesetzt werden kann, da sich bei der Behandlung von Böden erhebliche Wachstumsschäden bzw. Wachstumshemmungen zeigen.

Der Erfindung liegt die Aufgabe zugrunde, das vorgenannte Verfahren dahingehend weiter zu entwickeln, daß ein hochwertiger Humusbildner bzw. Dünger zu konkurrenzfähigen Preisen angeboten werden kann.

Ausgehend von dem eingangs angedeuteten Verfahren wird diese Aufgabe dadurch gelöst, daß die Rinde mit Trockendampf von mehr als 100 °C behandelt und mit einem in Wasser schwer oder nicht löslichen Stickstoffträger gemischt wird.

Praktische Versuche an Gemüsekulturen haben gezeigt, daß mit einem solchermaßen hergestellten Dünger eine erhebliche Steigerung des Wachstums -bis zum Dreifachen an Frischmasse und bis zum Doppelten an Trockenmassegegenüber herkömmlichen Bodenverbesserungsmitteln erzielt werden kann. Die Ursache dürfte in der Kombination folgender Einzelwirkungen zu suchen sein :

Abweichend vom bekannten Verfahren wird die Rinde beim erfindungsgemäßen Verfahren einer über 100 °C, beispielsweise bis 120 °C, liegenden Dampftemperatur ausgesetzt. Dadurch werden nicht nur die Bindungskräfte innerhalb der Rinde noch stärker angegriffen, also der Verrottungsprozeß der Rinde beschleunigt, sondern insbesondere die pathogenen und die wachstumshindernden Keime zerstört. Die bei dem bekannten Humusbildner durch diese Keime verursachte Wachstumshemmung entfällt also. Die Rinde wird quase sterilisiert. Überraschenderweise bleiben aber die wachstumsfördernden Bakterien und Keime und deren Vermehrungsfähigkeit weitgehend erhalten, da diese offensichtlich höhere Temperaturen vertragen.

Das Verhältnis von Kohlenstoff- zu Stickstoffgehalt beträgt bei Baumrinde etwa 100 : 1. Dieses entspricht einerseits nicht dem bei normalen Böden vorhandenen Verhältnis von 15 : 1, so daß Böden bei bloßer Behandlung mit Rinde allmählich an Stickstoff verarmen würden. Andererseits ist dieser hohe Kohlenstoffgehalt auch Ursache für den langsamen Verrottungsprozeß der Rinde im Boden. Um diese Stickstoffarmut zu beheben und damit aus der Rinde erst einen vollwertigen Dünger zu machen, ist erfindungsgemäß der Zusatz eines schwer oder nicht wasserlöslichen Stickstoffträgers vorgesehen. Es ist zwar beim Kompostieren von Rinde bereits vorgeschlagen worden, Stickstoffträger in natürlicher oder synthetischer Form zuzugeben. Diese können jedoch ihre Wirkung deshalb nur ungenügend entfalten, weil die Verrottung der Rinde und die Verwesung bzw. Zersetzung der Stickstoffträger in erheblich verschiedenen Zeiträumen erfolgt. So werden insbesondere Stickstoffträger aus organischen Abfällen während des Kompostierungsprozesses schneller verrotten als Rinde, so daß der fertige Kompost nicht die günstigste Zusammensetzung aufweisen kann. Da das erfindungsgemäße Verfahren keine Lagerung, sondern nur eine kurzzeitige Behandlung der Rinde erfordert, kann der Stickstoffgehalt durch die Zugabe des Stickstoffträgers sehr genau eingestellt werden. Im übrigen stellen sich beim erfindungsgemäßen Produkt im Boden offenbar Wechselwirkungen zwischen den Bakterien der Rinde, dem Stickstoffträger und möglicherweise auch der Boden-Mikrokultur ein, die noch nach Ausbringen des Düngers zu einer Erwärmung des Produktes und zu einer schnellen Verrottung der Rinde führen. Die Hintergründe dieser Vorgänge konnten noch nicht geklärt werden. Immerhin wird dieser Vorgang durch die schlechte oder fehlende Wasserlöslichkeit der Stickstoffträger begünstigt.

Für normale Gemüse- und Obstkulturen reicht ein Zusatz des Düngers bis zu 15 % zur vorhandenen Erde völlig aus. Bei Spezialkulturen, z. B. Topfpflanzen, Blumen etc. können auch größere Anteile verwendet werden.

Auch der Stickstoffträger wird gemäß einem Ausführungsbeispiel der Erfindung auf wenigstens 90 °C, ggfs. in einer Dampfatmosphäre, erhitzt. Dabei kann diese Behandlung vor der Zugabe zur Rinde oder aber auch -bei höherer Temperatur- während der Bedampfung der Rinde erfolgen. Damit lassen sich die Zersetzungsprozesse beider Ausgangsprodukte einander anpassen. Die Geruchsbelästigung und die hygienischen Gefahren, die insbesondere bei der Verwendung natürlicher organischer Eiweißabfälle stets auftreten, lassen sich auf diese Weise leicht beherrschen. Es entsteht ein inniges Gemisch von aufgeschlossener Rinde und Stickstoffträger, dessen Kohlenstoff-Stickstoffverhältnis wunschgemäß eingestellt werden kann.

Vorzugsweise werden als Stickstoffträger natürliche organische Produkte, zweckmäßigerweise Abfallprodukte, wie Biertrester, Bierhefe, Rizinusschrot, Leinsamenabfälle, Lederabfälle, Hornmehl, Konfiskate (nicht für den menschlichen Bedarf geeignete Tierabfälle) od. dgl. zugegeben werden. Insbesondere bei der Zugabe von Lederabfällen und Konfiskaten konnten gute Düngeeigenschaften festgestellt werden. Hervorragende Ergebnisse lassen sich auch mit Gelatine erhalten. Diese fällt beispielsweise bei der Herstellung Kapselmaterial für die pharmazeutische Industrie als Abfallprodukt an. Sie läßt sich mit dem erfindungsgemäßen Verfahren sehr gut verarbeiten, da sie bei etwa 60 °C flüssig wird, sich also mit der Rinde innig vermischen läßt, und ab ca. 90 °C der Molekülverband angegriffen wird.

In der Praxis hat es sich als zweckmäßig erwiesen, den oder die Stickstoffträger mit einem Anteil von 1 % bis 6 % zuzugeben. Der genaue Anteil richtet sich einerseits nach der Art des Stickstoffträgers, andererseits nach der Art des gewünschten Düngers.

Gemäß einem weiteren vorteilhaften Ausführungsbeispiel wird die Rinde auf eine Temperatur von mehr als 130 °C erhitzt und der oder die Stickstoffträger nach dem Erhitzen mit einem Anteil von mehr als 6 % zugegeben. Bei dieser erhöhten Bedampfungstemperatur, die ggfs. nicht nur durch Einleiten von Trockendampf, sondern durch zusätzliche Erhitzung der Rinde erzielt wird, erfolgt eine Extraktion der Inhaltsstoffe der Rinde. Hierbei handelt es sich insbesondere um ätherische Öle und dgl. Dieser hochwertige Extrakt kann in der Kosmetik-, Waschmittel- und Lösungsmittelindustrie nutzbringend verwendet werden. Auch hat sich gezeigt, daß bei dieser Temperatur in den Extrakten ein großer Anteil wachstumshemmender Stoffe enthalten sind. Dadurch wird die wachstumsfördernde Eigenschaft des fertigen Düngers verbessert. Andererseits kann der Extrakt ggfs. nach Trennung von anderweitig verwendbaren Komponenten, als Unkrautvertilgungsmittel eingesetzt werden. Durch diese Extraktion wird der Rinde allerdings ein erheblicher Anteil an Phosphaten und Stickstoff entzogen. Aus diesem Grund wird bei diesem Ausführungsbeispiel der Rinde ein höherer Anteil an Stickstoffträgern zugesetzt, um die gewünschten Stickstoff- und Phosphatwerte einzustellen.

Mit Vorzug wird die Rinde vor der Zugabe der Stickstoffträger auf 40 % oder weniger Feuchtigkeitsgehalt getrocknet, um einerseits nicht zuviel Transportgewicht zu haben, andererseits den Zersetzungsprozeß der Stickstoffträger nicht allzu schnell ablaufen zu lassen. Sofern als Stickstoffträger Konfiskate verwendet werden, sollte die Rinde sogar auf 10 % oder weniger Feuchtigkeitsgehalt getrocknet werden.

Verfahrensmäßig schlägt die Erfindung weiterhin vor, daß die Rinde zunächst vorzerkleinert, dann auf den gewünschten Feuchtegehalt gebracht, anschließend auf den gewünschten Feinheitsgrad zerkleinert und abschließend bedampft wird. Je nach Art des Stickstoffträgers kann dieser schon vor der Vorzerkleinerung, während der Feinzerkleinerung oder — wenn er selbst ausreichend mechanisch aufgeschlossen ist — erst während der Bedampfungsphase zugesetzt werden.

Der Entzug der Feuchtigkeit in der Rinde kann durch thermisches Trocknen oder aber auch auf mechanischem Weg, beispielsweise durch Pressen, vorzugsweise durch Zentrifugieren erfolgen.

Es hat sich ferner als zweckmäßig erwiesen, die Rinde in einem geschlossenen Behälter unter ständigem Umwälzen zu bedampfen. Hierbei ist der apparative Aufwand sehr gering. Ferner wird einer örtlichen Überhitzung der Rinde während des Bedampfungsprozesses und damit der Explosionsgefahr vorgebeugt. Praktische Versuche haben gezeigt, daß eine Bedampfungszeit von ca. 30 min ausreichend ist. Die bedampfte und mit Stickstoffträger versetzte Rinde kann abgesackt werden, wobei die Säcke luftdurchlässig sein sollten, um den noch weiterhin andauernden Humifizierungsprozeß zu begünstigen.

Soweit zuvor der Begriff « Rinde » verwendet worden ist, werden hierunter im botanischen Sinn die Kombination von Bast, Cambrium, Plasma und Protoplasma verstanden. Die Erfindung hat sich nun zum Ziel gesetzt, auch andere Produkte, die insbesondere in der Forstwirtschaft und bei der Holzverarbeitung anfallen, nutzbringend zu verwenden. So können der Rinde vor dem Zerkleinern bzw. vor dem Bedampfen Blätter und Nadeln und/oder Zweige, Äste und Pflanzen und/oder Früchte, Zapfen, Triebe und Blüten und/oder Sägemehl und Späne und/oder Wurzeln und/oder Torf zugegeben werden. Hierbei kommt insbesondere der Zugabe von Sägemehl und Spänen bzw. Wurzeln besondere Bedeutung zu. In Sägewerken und Papierfabriken fallen große Mengen an Sägemehl und auch Wurzeln an, die heute mit einem erheblichen technischen Aufwand zumeist verbrannt werden. Mit dem erfindungsgemäßen Verfahren lassen sich diese Abfallprodukte nutzbringend zu einem Humusbildner bzw. Dünger verarbeiten. Man hat zwar schon versucht, Sägemehl dem Kulturboden unterzumischen in der Annahme, daß hierdurch eine Auflockerung des Bodens möglich ist. Die Praxis hat aber gezeigt, daß bei solchermaßen behandelten Böden das Pflanzenwachstum ganz erheblich beeinträchtigt wird. Bei Einsatz dieser Produkte nach Behandlung gemäß dem erfindungsgemäßen Verfahren wird dieser nachteilige Effekt nicht mehr festgestellt, wobei vermutlich auch hier der Zusatz der Stickstoffträger und die schnellere Verrottung aufgrund der Bedampfung für den positiven Effekt verantwortlich ist.

In der Forstwirtschaft gewinnt heute die Ganzbaummethode zunehmend an Bedeutung. Hierbei wird der gefällte Baum in einer Maschine sowohl entastet, als auch entrindet. Äste und Blätter weisen einen höheren Stickstoffgehalt auf, als die Rinde. Das Kohlenstoff-Stickstoffverhältnis entspricht dabei etwa dem natürlichen Verhältnis im Boden. Erfindungsgemäß wird deshalb vorgeschlagen, der Rinde von Nadelhölzern die beim Entasten des Stammholzes von Nadelhölzern anfallenden Abfälle zuzugeben. Hierbei macht sich die Erfindung die weitere Tatsache zunutze, daß Nadelholzrinde einen pH-Wert im basischen Bereich besitzt, obgleich Nadelhölzer auf Böden mit einem pH-Wert im sauren Bereich besonders gut gedeihen. Umgekehrt verhält es sich bei Laubhölzern, deren Rinde einen pH-Wert im sauren Bereich besitzt, die aber auf alkalischen Böden die besten Lebensbedingungen vorfinden. Auf diese Weise vollzieht sich im Wald ein natürlicher Neutralisations-prozeß zwischen Rinde und Boden. Auf der anderen Seite ist bekannt, daß die meisten Kulturpflanzen am besten auf neutralem Boden gedeihen. Erfindungsgemäß wird vorgeschlagen, der Rinde von Nadelhölzern die beim Entasten des Stammholzes von Nadelhölzern anfallenden Abfälle zuzugeben bzw. der Rinde von Laubhölzern die beim Entasten des Stammholzes von Laubhölzern anfallenden Abfälle zuzugeben. Damit wird ein Dünger geschaffen, der von Hause aus im basischen bzw. sauren Bereich liegt und der — je nach pH-Wert des Bodens — so eingesetzt wird, daß der Boden mit der Zeit neutralisiert wird. Man wird also für basische Böden einen Dünger aus Laubholzabfällen, für saure Böden hingegen einen Dünger aus Nadelholzabfällen einsetzen. Die Trennung der Ausgangsstoffe bereitet deshalb keine Schwierigkeiten, weil diese Hölzer ohnehin stets getrennt geschlagen und verarbeitet werden. Im Bedarfsfall kann natürlich auch eine Mischung beider Dünger eingesetzt werden.

**Ansprüche**

1. Verfahren zur Herstellung eines natürlichen Humusbildners und Düngers auf der Grundlage von bei der Verarbeitung von Stammholz anfallender Baumrinde, die zerkleinert, ggfs. entfeuchtet und bedampft wird, dadurch gekennzeichnet, daß die Rinde mit Trockendampf von mehr als 100 °C behandelt und mit einem in Wasser schwer oder nicht löslichen Stickstoffträger gemischt wird.

2. Verfahren nach Anspruch 1, dadurch gekennzeichnet, daß der Stickstoffträger auf wenigstens 90 °C, ggfs. in einer Dampfatmosphäre, erhitzt wird.

3. Verfahren nach Anspruch 1 oder 2, dadurch gekennzeichnet, daß der Stickstoffträger zusammen mit der Rinde mit Trockendampf behandelt wird.

4. Verfahren nach einem der Ansprüche 1 bis 3, dadurch gekennzeichnet, daß der oder die Stickstoffträger in einem Anteil von 1 bis 6 % zugemischt werden.

5. Verfahren nach Anspruch 1 oder 2, dadurch gekennzeichnet, daß die Rinde auf eine Temperatur von mehr als 130 °C erhitzt und der oder die Stickstoffträger nach dem Erhitzen in einem Anteil von mehr als 6 % zugemischt werden.

6. Verfahren nach einem der Ansprüche 1 bis 5, dadurch gekennzeichnet, daß als Stickstoffträger natürliche organische Produkte, vorzugsweise Abfallprodukte zugemischt werden.

7. Verfahren nach Anspruch 6, dadurch gekennzeichnet, daß als Abfallprodukte Biertrester, Bierhefe, Rizinusschrot, Leinsamenabfälle, Gelatine, Lederabfälle, Hornmehl, Konfiskate oder dgl. verwendet werden.

8. Verfahren nach einem der Ansprüche 1 bis 7, dadurch gekennzeichnet, daß die Rinde vor der Zugabe der Stickstoffträger auf 40 % oder weniger Feuchtigkeitsgehalt entfeuchtet wird.

9. Verfahren nach einem der Ansprüche 1 bis 8, dadurch gekennzeichnet, daß bei Verwendung von Konfiskaten als Stickstoffträger die Rinde auf 10 % oder weniger Feuchtigkeitsgehalt entfeuchtet wird.

10. Verfahren nach einem der Ansprüche 1 bis 9, dadurch gekennzeichnet, daß die Rinde zunächst vorzerkleinert, dann auf den gewünschten Feuchtegehalt gebracht, anschließend auf den gewünschten Feinheitsgrad zerkleinert und abschließend mit Trockendampf behandelt wird.

11. Verfahren nach einem der Ansprüche 1 bis 10, dadurch gekennzeichnet, daß die Rinde durch thermisches Trocknen entfeuchtet wird.

12. Verfahren nach einem der Ansprüche 1 bis 10, dadurch gekennzeichnet, daß die Rinde durch Pressen oder, Zentrifugieren entfeuchtet wird.

13. Verfahren nach einem der Ansprüche 1 bis 12, dadurch gekennzeichnet, daß die Rinde in einem geschlossenen Behälter unter ständigem Umwälzen mit Trockendampf behandelt wird.

14. Verfahren nach einem der Ansprüche 1 bis 13, dadurch gekennzeichnet, daß der Rinde vor dem Zerkleinern bzw. vor dem Behandeln mit Trockendampf Blätter und Nadeln und/oder Zweige, Äste und Pflanzen und/oder Früchte, Zapfen, Triebe und Blüten und/oder Sägemehl und Späne und/oder Wurzeln und/oder Torf zugegeben werden.

15. Verfahren nach Anspruch 14, dadurch gekennzeichnet, daß der Rinde von Nadelhölzern die beim Entasten des Stammholzes von Nadelhölzern anfallenden Abfälle zugegeben werden.

16. Verfahren nach Anspruch 14, dadurch gekennzeichnet, daß der Rinde von Laubhölzern die beim Entasten des Stammholzes von Laubhölzern anfallenden Abfälle zugegeben werden.

17. Verfahren nach einem der Ansprüche 14 bis 16, dadurch gekennzeichnet, daß die Rinde und die beim Entasten des Stammholzes von Laub- und Nadelhölzern anfallenden Abfälle gemischt werden.

## Claims

1. A process for productiion of natural humus-forming substance and fertilizer from bark as produced on processing of tree trunks, which bark is comminuted, dried if necessary, and subsequently steam treated, characterized in that the bark ist treated with superheated steam of more than 100 °C and mixed with a nitrogen carrier being insoluble in water or difficultly soluble therein.

2. A process according to claim 1, characterized in that the nitrogen carrier is heated to at least 90 °C, possibly in a steam atmosphere.

3. A process according to claim 1 or 2, characterized in that the nitrogen carrier is steam treated together with the bark.

4. A process according to one of the claims 1 to 3, characterized in that the nitrogen carrier or carriers is (are) admixed with the bark in an amount of 1 to 6 %.

5. A process according to claim 1 or 2, characterized in that the bark is heated to a temperature of more than 130 °C and the nitrogen carrier or carriers is (are) added after the heating, in an amount of more than 6 %.

6. A process according to one of the claims 1 to 5, characterized in that natural organic products, preferably waste products are admixed as nitrogen carrier.

7. A process according to claim 6, characterized in that beer dregs, beer yeast, castor husks, linseed waste, gelatin, leather scrap, horn meal, condemned animal materials, or the like are used as nitrogen carriers.

8. A process according to one of the claims 1 to 7, characterized in that the bark is dried to 40 % or less moisture content before the addition of the nitrogen carriers.

9. A process according one of the claims 1 to 8, characterized in that on using condemned animal materials as a nitrogen carrier the bark is dried to at least 10 % moisture content.

10. A process according to one of the claims 1 to 9, characterized in that the bark is first precomminuted, then brought to the desired moisture content, and subsequently comminuted to the desired degree of fineness an then treated with the superheated steam.

11. A process according to one of the claims 1 to 10, characterized in that the bark is thermally dried.

12. A process according to one of the claims 1 to 10, characterized in that the bark is dried by pressing or centrifuging.

13. A process according to one of the claims 1 to 12, characterized in that the bark is treated with the superheated steam in a closed receptacle with continuous circulation.

14. A process according to one of the claims 1 to 13, characterized in that the bark is mixed, before being comminuted or steam treated with leaves and needles and/or branches, limbs and plants and/or fruits, cones, shoots, blossoms and/or sawdust and shavings and/or roots and/or turf.

15. A process according to claim 14, characterized in that the bark of coniferous woods is mixed with waste as produced on removing the branches from the trunks of coniferous trees.

16. A process according to claim 14, characterized in that the bark of deciduous woods is mixed with waste as produced on removing the branches from the trunks of deciduous trees.

17. A process according to one of claims 14 to 16, characterized in that bark and the waste produced on removing the branches from the trunks of deciduous and coniferous trees are mixed together.

**Revendications**

1. Procédé de fabrication d'un humogène et engrais naturel à partir d'écorce d'arbre obtenue comme déchet lors du traitement de bois de grume, qui est broyée, éventuellement séchée et traitée à la vapeur d'eau, caractérisé en ce que l'écorce est traitée avec de la vapeur d'eau sèche d'une température supérieure à 100 °C et mélangée avec un véhicule d'azote pas ou peu soluble dans l'eau.

2. Procédé selon la revendication 1, caractérisé en ce que ledit véhicule d'azote est chauffé à une température d'au moins 90 °C, le cas échéant, dans une atmosphère de vapeur d'eau.

3. Procédé selon la revendication 1 ou 2, caractérisé en ce que ledit véhicule d'azote et l'écorce sont traités ensemble avec de la vapeur d'eau sèche.

4. Procédé selon l'une ou l'autre des revendications 1 à 3, caractérisé en ce que le ou les véhicules d'azote sont mélangés avec l'écorce dans un rapport de 1 à 6 %.

5. Procédé selon la revendication 1 ou 2, caractérisé en ce que l'écorce est chauffée à une température supérieure à 130 °C, après quoi le ou les véhicules d'azote sont mélangés avec l'écorce chaude dans un rapport supérieur à 6 %.

6. Procédé selon l'une ou l'autre des revendications 1 à 5, caractérisé en ce que lesdits véhicules d'azote mélangés avec l'écorce sont des produits organiques naturels et, de préférence, des déchets ou détritus.

7. Procédé selon la revendication 6, caractérisé en ce que lesdits déchets sont par exemple des résidus de bière, des restes de levure, des déchets de graines de ricin ou de lin, de la gélatine, des déchets de cuir, de la farine de corne, des déchets d'abattoires et similaires, etc.

8. Procédé selon l'une ou l'autre des revendications 1 à 7, caractérisé en ce que l'écorce est, avant l'addition du véhicule d'azote, séchée jusqu'à une teneur en humidité de 40 % ou moins.

9. Procédé selon l'une ou l'autre des revendications 1 à 8, caractérisé en ce qu'en cas d'emploi de déchets d'abattoires et similaires comme véhicules d'azote, l'écorce est séchée jusqu'à une teneur en humidité de 10 % ou moins.

10. Procédé selon l'une ou l'autre des revendications 1 à 9, caractérisé en ce que l'écorce est successivement broyée, séchée jusqu'au degré d'humidité désiré, moulue jusqu'à la finesse appropriée et finalement traitée avec de la vapeur d'eau sèche.

11. Procédé selon l'une ou l'autre des revendications 1 à 10, caractérisé en ce que l'écorce est séchée par séchage thermique.

12. Procédé selon l'une ou l'autre des revendications 1 à 10, caractérisé en ce que l'écorce est séchée par pressurage, centrifugation ou autre.

13. Procédé selon l'une ou l'autre des revendications 1 à 12, caractérisé en ce que l'écorce est traitée avec de la vapeur d'eau sèche sous agitation ininterrompue dans un autoclave.

14. Procédé selon l'une ou l'autre des revendications 1 à 13, caractérisé en ce qu'on ajoute à l'écorce, avant son broyage ou son traitement à la vapeur d'eau sèche, des feuilles ou des aiguilles de résineux et/ou des branches, des rameaux et des plantes et/ou des fruits, des cônes de résineux et des inflorescences et/ou de la sciure et des copeaux de bois et/ou des racines ou de la tourbe.

15. Procédé selon la revendication 14, caractérisé en ce qu'on ajoute à l'écorce de résineux les déchets résultant de l'ébranchage du bois de grume de ces derniers.

16. Procédé selon la revendication 14, caractérisé en ce qu'on ajoute à l'écorce de feuillus les déchets résultant de l'ébranchage du bois de grume de ces derniers.

17. Procédé selon l'une ou l'autre des revendications 14 à 16, caractérisé en ce que l'écorce est mélangée avec les déchets résultant de l'ébranchage du bois de grume de feuillus et de résineux.